# EUROPÄISCHE PATENTSCHRIFT

(11) **EP 0 671 427 B1**
(45) Veröffentlichungstag und Bekanntmachung des Hinweises auf die Patenterteilung: **27.05.1998**
(21) Anmeldenummer: 95810128.9
(22) Anmeldetag: 01.03.1995
(51) Int. Cl.: C08G 59/68, C08G 59/72, C08G 59/42

(54) **Thermisch härtbare Epoxidharzsysteme mit gutem Reaktivitäts-/Stabilitätsverhalten**
Heat-curable epoxy resin composition having good reactivity/stability behaviour
Composition de résine époxyde durcissable par la chaleur ayant un bon équilibre entre la réactivité et la stabilité

(30) Priorität: 10.03.1994 CH 720/94
(43) Veröffentlichungstag der Anmeldung: 13.09.1995
(73) Patentinhaber: Ciba Specialty Chemicals Holding Inc., 4057 Basel (CH)
(72) Erfinder: Moser, Roland, CH-4058 Basel (CH); Bär, Daniel, CH-4125 Riehen (CH)

(56) Entgegenhaltungen:
- EP-A- 0 254 255
- DE-A- 1 520 206
- FR-A- 2 102 183
- US-A- 4 663 072
- PATENT ABSTRACTS OF JAPAN vol. 13, no. 249 (C-605) 9. Juni 1989 & JP-A-01 054 022 (TOSHIBA CORP) 1. März 1989

## Beschreibung

Die Erfindung betrifft neue thermisch härtbare Stoffsysteme, die
(a) mindestens ein Epoxidharz,
(b) mindestens ein Polycarbonsäureanhydrid und
(c) ein tertiäres Amin als Härtungsbeschleuniger enthalten,
   wobei ein Teil des Härtungsbeschleunigers (c) durch
(d) einen Komplex aus einem Borhalogenid und einem Amin ersetzt ist. Weiterhin bezieht sich die Erfindung auf die Verwendung derartiger Stoffsysteme als Giessmassen und auf ein bevorzugtes Verfahren zur Herstellung von Formkörpern unter Verwendung solcher Stoffsysteme.

Die oben genannten Stoffsysteme sind im U.S.-Patent (US-A-) 4,663,072 beschrieben. Als geeignete tertiäre Amine sind in dem U.S.-Patent Tribenzylamin, N,N-Dimethylbenzylamin und N-Benzyl-N-methylethanolamin konkret genannt.

Aus der Japanischen Offenlegungsschrift (JP-A-) Sho 01-054022 (1989) sind weiterhin thermisch härtbare Stoffsysteme bekannt, die
(a) mindestens ein Epoxidharz,
(b) mindestens ein Polycarbonsäureanhydrid und
(c) 1,4-Diazabicyclo-(2,2,2)-octan oder ein C₁-C₄-alkylsubstituiertes Derivat des 1,4-Diazabicyclo-(2,2,2)-octans als Härtungsbeschleuniger enthalten.

Der Härtungsbeschleuniger 1,4-Diazabicyclo-(2,2,2)-octan (auch unter der Abkürzung DABCO oder als Triethylendiamin bekannt) bewirkt, dass die Zusammensetzungen bei höheren Temperaturen, z. B. ab 120 °C, schnell aushärten und somit z. B. kurze Entformungszeiten erreicht werden können. Epoxidharzzusammensetzungen mit 1,4-Diazabicyclo-(2,2,2)-octan als Härtungsbeschleuniger sind jedoch auch bei mässig hohen Temperaturen schon sehr reaktiv, weisen daher nur eine relativ schlechte Lagerbeständigkeit auf und bieten insbesondere bei Temperaturen im Bereich von 60 bis 80 °C, wie sie bei der Aufbereitung und/oder Verarbeitung der Zusammensetzungen auch vor der Härtung häufig angewandt werden müssen, nur eine unbefriedigende Stabilität und kurze Topf- oder Verarbeitungszeit. Ein anderes in der JP-A-Sho 01-054022 als Beschleuniger genanntes tertiäres Amin ist Benzyldimethylamin. Benzyldimethylamin, das in entsprechenden kommerziellen Produkten vielfach als Härtungsbeschleuniger eingesetzt wird, weist jedoch die gleichen Nachteile wie DABCO, sogar in noch ausgeprägterem Masse, auf.

Wesentlich stabiler bei mässig hohen Temperaturen sind dagegen Epoxidharzsysteme mit einem Anhydridhärter und einem Komplex aus einem Borhalogenid und einem tertiären Amin als Härtungsbeschleuniger. Solche Zusammensetzungen, die z. B. im U.S. Patent Nr. (US-A-) 3,793,247 beschrieben sind, haben aber umgekehrt den Nachteil, dass sie auch eine relativ schlechte Reaktivität bei erhöhter Temperatur zeigen und somit Entformungszeiten bedingen können, wie sie heute wirtschaftlich vielfach nicht mehr vertretbar sind.

Die Aufgabe der vorliegenden Erfindung besteht darin, einen Beschleuniger für die thermische Härtung von Epoxidharzen mit Polycarbonsäureanhydriden zur Verfügung zu stellen, der ein ausgewogeneres Verhältnis zwischen Reaktivität bei hoher Temperatur und Stabilität (gegen einen vorzeitigen Beginn der Härtung) bei mässig hoher Temperatur aufweist als herkömmliche Härtungsbeschleuniger.

Die vorstehende Aufgabe wird erfindungsgemäss in der Weise gelöst, dass man als Härtungsbeschleuniger Gemische von 1,4-Diazabicyclo-(2,2,2)-octan oder von einem C₁-C₄-alkylsubstituierten Derivat des 1,4-Diazabicyclo-(2,2,2)-octans mit einem Komplex aus einem Borhalogenid und einem tertiären Amin einsetzt. Überraschenderweise beschleunigen nämlich die genannten Gemische bei niedrigeren Temperaturen die Härtung von Epoxidharzen mit Härtern, wie Polycarbonsäureanhydriden, bedeutend weniger als reine 1,4-Diazabicyclo-(2,2,2)-octane oder Benzyldimethylamin, während sich ihre Beschleunigungswirkung bei Temperaturen, wie sie normalerweise bei der Härtung eingesetzt werden, nur in einem Masse von der der genannten Beschleuniger unterscheidet, die für die Praxis ohne weiteres vernachlässigbar ist.

Ein Gegenstand der vorliegenden Erfindung ist daher ein thermisch härtbares Stoffsystem, umfassend
(a) mindestens ein Epoxidharz,
(b) mindestens ein Polycarbonsäureanhydrid und
(c) ein tertiäres Amin als Härtungsbeschleuniger,
   wobei ein Teil des Härtungsbeschleunigers (c) durch
(d) einen Komplex aus einem Borhalogenid und einem Amin ersetzt ist, das dadurch gekennzeichnet ist, dass es sich bei dem tertiären Amin um 1,4-Diazabicyclo-(2,2,2)-octan oder ein ein C₁-C₄-alkylsubstituiertes Derivat des 1,4-Diazabicyclo-(2,2,2)-octans handelt.

Die erfindungsgemässen thermisch härtbaren Stoffsysteme können Epoxidharze jeglicher Art enthalten. Zweckmässig enthalten diese durchschnittlich mehr als eine 1,2-Epoxidgruppe pro Molekül, wobei es sich bevorzugt um terminale Epoxid- oder 2-Methyloxiranylgruppen und insbesondere um 2,3-Epoxypropylgruppen handelt, die direkt an ein Sauerstoff-, Stickstoff- oder Schwefelatom gebunden sind.

So umfassen die Epoxidharze z. B. Polyglycidyl- und Poly(β-methylglycidyl)ester, die durch Reaktion einer Verbindung mit zwei oder mehr Carboxylgruppen mit Epichlorhydrin oder β-Methylepichlorhydrin in Gegenwart von Alkali erhältlich sind. Als Verbindungen mit zwei oder mehr Carboxylgruppen kommen z. B. aliphatische Carbonsäuren, wie Oxalsäure, Bernsteinsäure, Adipinsäure, Sebazinsäure; dimerisierte oder trimerisierte Linolsäure, cycloaliphatische Carbonsäuren, wie Hexahydrophthalsäure, 4-Methylhexahydrophthalsäure, Tetrahydrophthalsäure, 4-Methyltetrahydrophthalsäure, oder aromatische Carbonsäuren, wie Phthalsäure, Isophthalsäure, Terephthalsäure, Trimellitsäure oder Trimesinsäure, u. s. w. in Frage.

Weiterhin geeignet sind Polyglycidyl- und Poly(β-methylglycidyl)ether, wie sie beispielsweise durch Reaktion einer Verbindung mit zwei oder mehr alkoholischen oder phenolischen Hydroxylgruppen mit Epichlorhydrin oder β-Methylepichlorhydrin in Gegenwart von Alkali oder in Gegenwart eines sauren Katalysators und Nachbehandlung mit Alkali erhältlich sind. Derartige Polyglycidylether können z. B. hergestellt werden ausgehend von aliphatischen Polyhydroxylverbindungen, wie Ethylenglycol, Poly(oxyethylen)polyolen, beispielsweise Diethylenglycol oder Triethylenglycol, Propylenglycol oder Poly(oxypropylen)polyolen, Propan-1,3-diol, Butan-1,4-diol, Pentan-1,5-diol, Hexan-1,6-diol, Hexan-2,4,6-triol, 1,1,1-Trimethylolpropan oder Pentaerythrit. Geeignet sind ebenso cycloaliphatische Alkohole, wie z. B. 1,1-Bis(hydroxymethyl)cyclohex-3-en, Bis(4-hydroxycyclohexyl)-methan, 2,2-Bis(4-hydroxycyclohexyl)propan, und Alkohole mit aromatischen Ringen im Molekül, wie N,N-Bis(2-hydroxyethyl)anilin oder 4,4'-Bis(2-hydroxyethylamino)- diphenylmethan. Bevorzugte Alkohole mit aromatischen Ringen sind Polyglycidylether, die aus Verbindungen mit zwei oder mehreren phenolischen Hydroxylgruppen erhältlich sind, wie z. B. aus Resorcin, Brenzkatechin, Hydrochinon, Phloroglucin oder aus mehrkernigen Phenolen, beispielsweise aus Bis(4-hydroxyphenyl)methan und 2,2-Bis(4-hydroxyphenyl)propan, 2,2-Bis(3,5-dibrom-4-hydroxyphenyl)propan, 1,1,2,2-tetrakis(4-hydroxyphenyl)ethan, 4,4'-Dihydroxydiphenyl, Bis(4-hydroxyphenyl)sulfon, oder aus Novolaken auf Basis von Aldehyden, wie Formaldehyd, Acetaldehyd, Chloral, Furfural, und Phenol oder Phenolderivaten, die einen oder mehrere Chlor- oder C₁-C₉-Alkylsubstituenten aufweisen, wie 4-Chlorphenol, Kresol oder 4-tert.-Butylphenol, insbesondere aus Phenol-Formaldehyd- und Kresol-Formaldehyd-Novolaken.

Weiterhin können Poly(N-glycidyl)verbindungen eingesetzt werden, die beispielsweise durch Dehydrohalogenierung von Reaktionsprodukten aus Epichlorhydrin und Aminen mit mindestens zwei Aminwasserstoffatomen erhältlich sind, wie z. B. aus Anilin, N-Butylamin, Bis(4-aminophenyl)methan, Bis(4-aminophenyl)sulfon oder Bis(4-methylaminophenyl)methan. Eine andere N-Glycidylverbindung, die als Epoxidharz für die erfindungsgemässen Zusammensetzungen in Frage kommt, ist z. B. Triglycidylisocyanurat.

Die Epoxidharze können auch Mischtypen sein, beispielsweise eine oder mehrere Gylcidylether- und eine oder mehrere Glycidylestergruppen in einem Molekül aufweisen, wie der Gylcidylether-glycidylester von Salicylsäure.

Aber auch Epoxidharze, die nicht-terminale Epoxidgruppen enthalten, können eingesetzt werden, wie z. B. Vinylcyclohexendioxid, Dicyclopentadiendioxid, 3,4-Epoxydihydrocyclopentadienylglycidylether, Limonendioxid, 3,4-Epoxycyclohexylmethyl-3',4'-epoxycyclohexylcarboxylat und sein 6,6'-Dimethylderivat, das Bis(3,4-epoxycyclohexancarboxylat) von Ethylenglycol oder 3-(3,4-Epoxycyclohexyl-8,9-epoxy-2,4-dioxyspiro[5,5]undecan, epoxidierte Butadienpolymere oder epoxidierte Copolymere von Butadien mit anderen ethylenisch ungesättigten Verbindungen, wie Styrol oder Vinylacetat.

Natürlich können die erfindungsgemässen Stoffsysteme auch Gemische von zwei oder mehr als zwei Epoxidharzen, wie den oben genannten, enthalten. In manchen Fällen ist es von besonderem Vorteil, Gemische aus festen und flüssigen Epoxidharzen, wie z. B. Oligomerengemische einzusetzen.

Als Epoxidharze besonders bevorzugt sind
3,4-Epoxycyclohexyl-methyl-3',4'-epoxycyclohexancarboxylat sowie Polyglycidylether auf Basis von Novolaken aus Formaldehyd und Phenol selbst oder einem Phenolderivat, das gegebenenfalls einen Chlor- oder einen C₁-C₄-Alkylringsubstituenten aufweist, und insbesondere Polyglycidylether auf Basis von Bis(4-hydroxyphenyl)methan (Bisphenol F) und/oder 2,2'-Bis(4-hydroxyphenyl)propan (Bisphenol A) oder auf Basis eines Gemisches von Bisphenol A und Bisphenol F.

Eines oder mehrere Polycarbonsäureanhydride bilden als Komponente (b) den Härter der erfindungsgemässen Epoxidharzzusammensetzungen. Besonders bevorzugt sind diese Anhydride bei Raumtemperatur flüssig oder Festkörper, insbesondere mit einem Schmelz- oder Sublimationspunkt bis zu 150 °C. Beispiele für geeignete Anhydride sind Phthalsäureanhydrid, Hexahydrophthalsäureanhydrid, Methyl-1,2,3,6-tetrahydrophthalsäureanhydrid, Hexachlorendomethylen-1,2,3,6-tetrahydrophthalsäure- anhydrid oder Methylendomethylentetrahydrophthalsäureanhydrid, Maleinsäureanhydrid, Bernsteinsäureanhydrid oder Alkenylbernsteinsäureanhydride, wie Nonenyl- oder Dodecenylbernsteinsäureanhydrid, Polysebacinsäureanhydrid, Polaacelainsäureanhydrid, Pyrromellitsäuredianhydrid, Benzophenon-3,3',4,4'-tetracarboxylsäureanhydrid. Selbstverständlich können auch Gemische aus einem oder mehreren Anhydriden eingesetzt werden. Die Polycarboxylsäureanhydride werden üblicherweise in einer Menge eingesetzt, dass 0,4 bis 1,1 Carboxylsäureanhydridäquivalente auf ein Äquivalent Epoxidgruppen in den erfindungsgemässen Zusammensetzungen kommen. Es können aber auch grössere Mengen Härter eingesetzt werden, z. B. entsprechend einem Verhältnis von 1,5 bis 1,6 Anhydridäquivalenten pro Epoxidäquivalent.

Bevorzugt sind die Anhydride aromatischer Polycarbonsäuren, insbesondere Phthalsäureanhydrid, oder cycloaliphatischer Polycarbonsäuren, wie Hexahydrophthalsäure- und Tetrahydrophthalsäureanhydrid oder Derivate der genannten Verbindungen mit C₁-C₄-Alkylsubstituenten.

Bei der Komponente (c) der erfindungsgemässen Stoffsysteme und Zusammensetzungen handelt es sich entweder um 1,4-Diazabicyclo-(2,2,2)-octan selbst oder um ein Derivat dieser Verbindung, das einen oder mehrere C₁-C₄-Alkylsubstituenten aufweist. Derartige Verbindungen sind dem Fachmann bekannt, zum Teil kommerziell verfügbar oder können nach bekannten Methoden, z. B. gemäss der WO-A-87/03 592, hergestellt werden. 1,4-Diazabicyclo-(2,2,2)-octan selbst ist bevorzugt.

Die Komponente (d) der erfindungsgemässen Epoxidharzzusammensetzungen ist bevorzugt ein Komplex aus Bortrifluorid oder aus Bortrichlorid und dem Amin. Als Amine kommen primäre und sekundäre sowie bevorzugt tertiäre Amine in Frage. Ebenso sollen hier vom Begriff "Amin" auch Stickstoffheterocyclen umfasst sein.

Bevorzugte Komplexe haben die Formel B(Hal)₃X, worin X ein Amin der Formel H₂NR¹ oder NR¹R²R³ und Hal ein Fluor- oder Chloratom bedeuten und R¹, R², R³ unabhängig voneinander für einen Alkylrest mit 1 bis 18 Kohlenstoffatomen, einen Cycloalkylrest mit 3 bis 18 Kohlenstoffatomen, einen Aralkylrest mit 6 bis 18 Kohlenstoffatomen, einen aromatischen Rest mit 6 bis 18 Kohlenstoffatomen stehen oder R¹und R² zusammen mit dem Stickstoffatom in der vorstehenden Formel für einen fünf- oder sechsgliedrigen Heterocyclus stehen, an den gegebenenfalls noch ein Benzolring annelliert ist, und R³ eine der oben schon genannten Bedeutungen hat oder R¹, R² und R³ zusammen mit dem Stickstoffatom in der vorstehenden Formel einen fünf- oder sechsgliedrigen Heterocyclus stehen, an den gegebenenfalls noch ein Benzolring annelliert ist. Beispiele für geeignete Amine sind Ethylamin, Trimethylamin, Tri-n-propylamin, N,N-Dimethyloctylamin, Triphenylamin, N,N-Dimethylanilin, N-Benzyldimethylamin, Pyridin, die verschiedenen Picoline, Collidin (2,4,6-Trimethylpyridin), Chinolin oder Isochinolin, Piperidin, N-Methylpiperidin, N-Methylmorpholin, 1,4-Diazabicyclo-(2,2,2)octan, Hexa(N-methyl)melamin, N-Cyclohexyldimethylamin oder Phenylendiamine, z. B. 1,4-Phenylendiamin. Borhalogenidkomplexe wie diese sind bekannt und z. B. gemäss oder analog zu Verfahren herstellbar, die in den US Patenten 2,890,195 und 3,793,247 beschrieben.

Besonders bevorzugt sind Komplexverbindungen aus Bortrifluorid und insbesondere aus Bortrichlorid und aliphatischen Aminen, bei denen die aliphatischen Reste, gegebenenfalls unabhängig voneinander 1 bis 8 Kohlenstoffatome aufweisen. Am meisten bevorzugt sind die Komplexverbindungen aus BCl₃ und N,N-Dimethyloctylamin und aus BF₃ und Monoethylamin.

Die erfindungsgemässen Epoxidharzzusammensetzungen enthalten den Härtungsbeschleuniger, d. h. die Komponenten (c) und (d) zusammen in einer Gesamtmenge, wie sie für den Einsatz tertiärer Amine als Härtungsbeschleuniger für die Anhydridhärtung üblich ist, im allgemeinen also in einer Menge von 0,05 bis 15, bevorzugt 0,3 bis 5 Gewichtsprozent, bezogen auf die Gesamtmenge Epoxidharz und Polycarbonsäureanhydrid. Ganz besonders bevorzugt ist ein Gesamtmenge an Beschleuniger von weniger als 2,5 Gewichtsprozent, beispielsweise von 0,5 bis 1,5 Gewichtprozent, bezogen auf die Gesamtmenge Epoxidharz und Polycarbonsäureanhydrid.

Das Mengenverhältnis der beiden Beschleunigerkomponenten (c) und (d) zueinander kann der Fachmann gemäss seinen Wünschen nach Potlife und Lagerstabilität in relativ weiten Grenzen variieren, wobei er nötigenfalls durch wenige einfache Messungen, beispielsweise der Gelierzeit oder der Viskositätszunahme der beschleunigten Epoxidharzzusammensetzungen, das seinen Vorstellungen entsprechende Verhältnis der Komponenten (c) und (d) schnell festlegen kann. Besonders gute Ergebnisse lassen sich erreichen, wenn das Gewichtsverhältnis der DABCO-Komponente (c) zur Borhalogenidkomplexkomponente (d) zwischen 8 zu 92, insbesondere zwischen 20 zu 80, und 75 zu 25, ganz besonders zwischen 40 zu 60 und 75 zu 25 liegt. Ein sehr ausgewogenes Reaktivitäts-/Stabilitätsverhältnis und gleichzeitig einen sehr guten T_{g}-Wert für das gehärtete Material erreicht man z. B. mit Mischungen ungefähr gleicher Gewichtsteile der Komponenten (c) und (d).

Die erfindungsgemässen Zusammensetzungen können zusätzlich noch weitere Bestandteile enthalten, wie sie in der Technologie thermisch härtbarer Epoxidharzzusammensetzungen üblich sind, z. B. Weichmacher, wie Dibutylphthalat, Dioctylphthalat, oder Tricresylphosphat, geeignete inerte Lösungsmittel, reaktive Verdünner, speziell monofunktionelle Epoxide, beispielsweise Butylglycidylether, Isooctylglycidylether, Phenylglycidylether oder Glycidylester monofunktioneller Carbonsäuren, insbesondere (verzweigt-) aliphatischer Carbonsäuren. Andere übliche Additive sind beispielsweise Pigmente, Farbstoffe, Flammhemmer, Benetzungsmittel, Entschäumer, Antioxidantien und Lichtstabilisatoren. In manchen Fällen kann es auch vorteilhaft sein, Polyalkylenpolyole, wie Polyethylenglycol oder Polypropylenglycol, bevorzugt in einer Menge von 1 bis 30 Gewichtsprozent, bezogen auf Epoxidharz, zuzusetzen, beispielsweise um mechanischen Eigenschaften, wie die Flexibilität, des gehärteten Materials zu verbessern.

Eine weitere wichtige Gruppe von Additiven bilden Streckmittel, Verstärkungsmittel und Füllstoffe. Beispiele hierfür sind Asphalt, Bitumen, Kaolin (China Clay), Quarzmehl, Christobalit, Glaspulver, Glas(hohl)kugeln, Kalk, Glimmer, Wollastonit, Aluminiumoxid, Magnesiumoxid, Fasermaterial, auch in pulverisierter Form, z. B. Glasfasern, Kohlefasern, Metallfasern, Polyvinylchlorid, Nylon, Polyethylen, Polyester, gehärtetes Epoxidmaterial, oder flammhemmende Füllstoffe, insbesondere Aluminiumtrihydrat. Die Füllstoffe können gegebenenfalls oberflächenbehandelt sein, z. B. mit Silan- oder Organotitanathaftvermittlern. Natürlich können auch Gemische von Füllstoffen eingesetzt werden. Die Füllstoffe haben bevorzugt eine Teilchengrösse zwischen 10 und 3000 µm, insbesondere zwischen 50 und 1000 µm. Ihr Gehalt kann beispielsweise 20 bis 75 Gewichtsprozent, insbesondere 55 bis 65 Gewichtsprozent der erfindungsgemässen Mischungen ausmachen. Besonders bei Verwendung von Füllstoffen kann es von Vorteil sein, den erfindungsgemässen Epoxidharzzusammensetzungen ein Antiabsetzmittel zuzusetzen, z. B. ein Thixotropiermittel, wie hochdisperses Siliziumdioxid, Bentonit oder hydriertes Castoröl. Da die Antiabsetzwirkung der Thixotropiermittel bei höheren Temperaturen, wie sie bei der Härtung der Zusammensetzungen besonders kurz vor der Gelierung auftreten können, infolge einer anfänglichen Viskositätsabnahme manchmal nicht ganz ausreichend sein kann, kann es weiterhin vorteilhaft sein, den erfindungsgemässen Zusammensetzungen Polymere zuzusetzen, die in der heissen Zusammensetzung löslich sind, z. B. Polyvinylformale, Polyvinylbutyrale, Polyoxyethylene, Polycaprolactone oder Polyamide, im allgemeinen in Mengen von 0,5 bis 20 Gew.-%, bezogen auf das Epoxidharz, bevorzugt in Mengen von 1 bis 3 Gew.-%.

Die erfindungsgemässen Stoffsysteme können in bekannter Weise insbesondere als Mehrkomponentensystem, also in Form mehrerer Einzelkomponenten konfektioniert sein, die jeweils nur einen Teil der Bestandteile (a), (b), (c) und (d) umfassen. Bei Zweikomponentensystemen kann die Beschleunigerzusammensetzung zu gleichen oder zu verschiedenen Anteilen entweder der Epoxidharzkomponente oder bevorzugt der Härterkomponente, aber auch beiden Komponenten beigemischt sein. Selbstverständlich ist es genauso möglich, jeweils einen Bestandteil des erfindungsgemässen Härtungsbeschleunigers einer der beiden Komponenten zuzusetzen oder einen Bestandteil einer der Komponenten, beispielsweise der Härterkomponente, und den anderen Bestandteil des Beschleunigers in unvermischter Form zu verwenden. Ein weiteres erfindungsgemässes Mehrkomponentenstoffsystem könnte z. B. aus 1,4-Diazabicyclo-(2,2,2)-octan oder einem C₁-C₄-alkylsubstituiertes Derivat des 1,4-Diazabicyclo-(2,2,2)-octans als einer ersten Komponente und einer härtbaren Zusammensetzung enthaltend ein Epoxidharz, ein Polycarbonsäureanhydrid und die relativ latente Komplexverbindung aus dem Borhalogenid und dem Amin als einer weiteren Komponente bestehen. Besonders vorteilhaft ist ein erfindungsgemässes Stoffsystem mit mehr als zwei Komponenten, nämlich einer Epoxidharzkomponente, einer Härterkomponente und einer Beschleunigerzusammensetzung aus den oben genannten Bestandteilen (c) und (d) als dritter Komponente.

Zusammensetzungen, die 1,4-Diazabicyclo-(2,2,2)-octan oder ein
C₁-C₄-alkylsubstituiertes Derivat des 1,4-Diazabicyclo-(2,2,2)-octans, einen Komplex aus einem Borhalogenid und einem Amin und gegebenenfalls ein Polycarbonsäureanhydrid und/oder ein Lösungsmittel, z. B. Polyethylenglycol oder Dibutylphthalat, enthalten, bilden vorteilhafte Einzelkomponenten erfindungsgemässer Mehrkomponentenstoffsysteme.

Die erfindungsgemässen Stoffsysteme oder Einzelkomponenten zur Herstellung der Stoffsysteme können z. B. durch Vermischen ihrer Bestandteile mit Hilfe konventioneller Mittel, wie Rührern, Knetern, Rollen oder Mühlen hergestellt werden, wobei die Bestandteile oder Komponenten gegebenenfalls erhitzt werden. Da eine Vermischung des Epoxidharzes mit dem Härter im allgemeinen unterhalb der Härtungstemperatur erfolgen soll, kann es von Vorteil sein, andere Bestandteile der erfindungsgemässen Stoffsysteme, wie die Härtungsbeschleuniger (c) und (d), aber auch Füllstoffe oder andere Additive zunächst mit dem Epoxidharz oder dem Härter vorzumischen, da hierbei im allgemeinen höhere Temperaturen angewandt werden können.

Die Aushärtung des Endgemisches erfolgt im allgemeinen bei Temperaturen zwischen 80 und 200 °C, bevorzugt zwischen 90 und 160 °C.

Die thermisch härtbaren Stoffsysteme gemäss der Erfindung können als Giessharze für alle Anwendungsgebiete verwendet werden, wo thermisch härtbare Epoxidharzsysteme eingesetzt werden, z. B. zur Herstellung von Prepregs oder Laminaten, von Oberflächenbeschichtungen, zum Vergiessen elektrischer und elektronischer Bauteile, als Klebstoffe oder zur Herstellung von Formkörpern. Die Erfindung betrifft somit weiterhin die Verwendung der beschriebenen härtbaren Stoffsysteme als Giessmassen, insbesondere als Elektrogiessmassen.

Die Herstellung von Formkörpern kann konventionell, z. B. von Hand, erfolgen. Eine weitere Möglichkeit ist die Verwendung des automatischen Druckgelierverfahrens, das z. B. in der EP-A-0 333 456 beschrieben ist.

Ein weiterer Gegenstand der Erfindung ist somit ein Verfahren zur Herstellung von Formkörpern mit Hilfe eines der oben beschriebenen Stoffsysteme, bei dem eine das Epoxidharz umfassende Komponente des Stoffsystems und eine den Härter umfassende Komponente des Stoffsystems sowie die gegebenenfalls weiteren Bestandteile des Stoffsystems bei einer niedrigeren Temperatur als der Härtungstemperatur, z. B. bei 40 bis 80 °C, insbesondere bei 40 bis 60 °C vermischt werden, und diese Mischung gegebenenfalls unter Druck, z. B. einem Druck von 1,5 bis 6 bar, insbesondere von 1,5 bis 3 bar, einer Form zugeführt wird, deren Innentemperatur so hoch ist, dass die Härtung der Masse erfolgt, wobei bevorzugt laufend ungehärtetes Material in einem Ausmass nachgeführt wird, dass eine eventuell im Verlauf der Härtung erfolgende Schrumpfung des in der Form befindlichen Materials ausgeglichen wird.

### Beispiel 1

Jeweils 100 g Bisphenol A-diglycidylether (Epoxidzahl 5,2Äquiv./kg) werden mit 79,8 g Methyltetrahydrophthalsäureanhydridisomerengemisch (0,85 Mol Anhydrid/Epoxidäquivalent) sowie mit den in der nachfolgenden Tabelle 1 jeweils angegebenen Mengen 1,4-Diazabicyclo-(2,2,2)-octan (DABCO) und Bortrichlorid-Octyldimethylamin-Komplex homogen vermischt.

Bei den Gemischen werden jeweils die Zeit, die bei einer Temperatur von 80 °C bis zur Ausbildung einer Viskosität von 1500 mPa·s verstreicht, (Viskositätsaufbau gemäss DIN 53015/Hoeppler Kugelfallviskosimeter; Probenmasse ca. 10 ml), die Gelierzeit nach Gelnorm gemäss DIN 16945, Blatt 1 unter Verwendung eines Gel Timers Gelnorm® der Fa. GEL INSTRUMENT AD, CH bei einer Probenmasse von 15 ml sowie die Erweichungstemperatur T_{g} gemäss der Norm IEC 15a der Int. Electrotechnical Commission unter Verwendung eines Mettler TA 3000® (Aufheizgeschwindigkeit 10 °C/Minute; Einwaage ca. 30 Milligramm) bestimmt. Die gemessenen Werte sind ebenfalls in der Tabelle 1 angegeben.

**Tabelle 1:**

| Beispiel Nr. | 1.1 | 1.2 | 1.3 | 1.4 | 1.5 |
|---|---|---|---|---|---|
| Mengen in Gramm von DABCO BCl₃/(CH₃)₂N(C₈H₁₇)-Komplex | 0.7 | 0.5 | 0.35 | 0.2 | 0.0 |
| | 0.0 | 0.2 | 0.35 | 0.5 | 0.7 |
| Viskositätsaufbau [min] | 150 | 205 | 270 | -* | -* |
| Gelierzeit ** bei | | | | | |
| | | | | | |
| 80 °C | 3h46' | 5h20' | 6h33' | 9h08' | 27h06' |
| 100 °C | 52'50" | 1h06' | 1h24' | 1h36' | 2h48' |
| 140 °C | 3'43" | 5'42" | 5'38" | 6'34" | 8'22" |
| T_{g} [°C] | 133 | 132 | 134 | 131 | 127 |

| | | | | | |
|---|---|---|---|---|---|
| * nicht bestimmt | | | | | |
| ** ' = Minuten; " = Sekunden | | | | | |

### Beispiel 2

100 g eines gemischten Diglycidylethers von Bisphenol A und Bisphenol F (Epoxidzahl des Gemisches 5,65 Äquiv/kg) werden mit 80 g Methyltetrahydrophthalsäureanhydridisomerengemisch (0,85 Mol Anhydrid/Epoxidäquivalent), 11 g Polyethylenglycol 400 (Molekulargewicht 400), 0,2 g 1,4-Diazabicyclo-(2,2,2)-octan und 0,5 g Bortrichlorid-Octyldimethylamin-Komplex und Quarzmehl W 12 homogen zu einer Zusammensetzung vermischt, die 65 Gewichtsprozent Quarzmehl enthält.

Das Stoffsystem weist folgende Eigenschaften auf:

| Gelierzeit bei | |
|---|---|
| 80 °C | 7h30' |
| 100 °C | 1h50' |
| 140 °C | 7'37". |

Nach einer Härtung von 4 Stunden bei 100 °C und 10 Stunden bei 140 °C kann man folgende Eigenschaften feststellen:

| | |
|---|---|
| T_{g}(bestimmt wie unter Beispiel 1 angegeben) | 90 °C; |
| Biegefestigkeit¹ | 151 N/mm²; |
| E-Modul aus Biegeversuch¹ | 11060 N/mm²; |
| Schlagbiegefestigkeit² | 11 kJ/m². |

| | |
|---|---|
| ¹ gemäss ISO 178; Probekörper 60x10x4 Millimeter | |
| ² gemäss ISO 179/1D; Probekörper 60x10x4 Millimeter | |

Damit zeigt diese Zusammensetzung mehr als die doppelte Gelierzeit bei 80 °C und bietet damit auch mehr als die doppelte Topfzeit bei dieser Temperatur als eine gleichartige Epoxidzusammensetzung mit Benzyldimethylamin als Härtungsbeschleuniger, während die anderen oben angeführten Messdaten zumindest gleich gut sind wie die einer gleichartigen Mischung mit Benzyldimethylamin.

## Patentansprüche

1. Thermisch härtbares Stoffsystem umfassend
(a) mindestens ein Epoxidharz,
(b) mindestens ein Polycarbonsäureanhydrid und
(c) ein tertiäres Amin als Härtungsbeschleuniger,
wobei ein Teil des Härtungsbeschleunigers (c) durch
(d) einen Komplex aus einem Borhalogenid und einem Amin ersetzt ist,
dadurch gekennzeichnet, dass es sich bei dem tertiären Amin um 1,4-Diazabicyclo-(2,2,2)-octan oder ein C₁-C₄-alkylsubstituiertes Derivat des 1,4-Diazabicyclo-(2,2,2)-octans handelt.

2. Stoffsystem nach Anspruch 1, das als Komponente (c) 1,4-Diazabicyclo-(2,2,2)-octan enthält.

3. Stoffsystem nach einem der Ansprüche 1 oder 2, das Komplexe der Formel
B(Hal)₃X
enthält, worin
X ein Amin der Formel H₂NR¹ oder NR¹R²R³ und
Hal ein Fluor- oder Chloratom bedeuten sowie
R¹, R², R³ unabhängig voneinander für einen Alkylrest mit 1 bis 18 Kohlenstoffatomen, Cycloalkylrest mit 3 bis 18 Kohlenstoffatomen, Aralkylrest mit 6 bis 18 Kohlenstoffatomen, aromatischen Rest mit 6 bis 18 Kohlenstoffatomen stehen oder R¹und R² zusammen mit dem Stickstoffatom in der vorstehenden Formel für einen fünf- oder sechsgliedrigen Heterocyclus stehen, an den gegebenenfalls noch ein Benzolring annelliert ist, und R³ eine der oben schon genannten Bedeutungen hat oder R¹, R² und R³ zusammen mit dem Stickstoffatom in der vorstehenden Formel für einen fünf- oder sechsgliedrigen Heterocyclus stehen, an den gegebenenfalls noch ein Benzolring annelliert ist.

4. Stoffsystem nach einem der Ansprüche 1 bis 3, bei dem das Gewichtsverhältnis der Komponente (c) zur Komponente (d) zwischen zwischen 8 zu 92 und 75 zu 25 liegt.

5. Stoffsystem nach einem der Ansprüche 1 bis 4, das als Epoxidharz einen Glycidylether auf Basis von Bis(4-hydroxyphenyl)methan (Bisphenol F) und/oder auf Basis von 2,2'-Bis(4-hydroxyphenyl)propan (Bisphenol A) oder auf Basis eines Gemisches von Bisphenol A und Bisphenol F enthält.

6. Stoffsystem nach einem der Ansprüche 1 bis 5, das Anhydride aromatischer oder cycloaliphatischer Polycarbonsäuren enthält.

7. Stoffsystem nach einem der Ansprüche 1 bis 6 in Form mehrerer Einzelkomponenten, die jeweils nur einen Teil der Bestandteile (a), (b), (c) und (d) umfassen.

8. Verwendung eines Stoffsystems nach einem der Ansprüche 1 bis 7 als Giessmasse, insbesondere als Elektrogiessmasse.

9. Verfahren zur Herstellung von Formkörpern mit Hilfe eines Stoffsystems nach einem der Ansprüche 1 bis 7, bei dem eine das Epoxidharz umfassende Komponente des Stoffsystems und eine den Härter umfassende Komponente des Stoffsystems sowie gegebenenfalls die weiteren Bestandteile des Stoffsystems, bei einer niedrigeren Temperatur als der Härtungstemperatur vermischt werden, und diese Mischung, gegebenenfalls unter Druck, einer Form zugeführt wird, deren Innentemperatur so hoch ist, dass die Härtung der Masse erfolgt, wobei bevorzugt laufend ungehärtetes Material in einem Ausmass nachgeführt wird, dass eine eventuell im Verlauf der Härtung eintretende Schrumpfung des in der Form befindlichen Materials ausgeglichen wird.

## Claims

1. A heat-curable system of substances comprising
(a) at least one epoxy resin,
(b) at least one polycarboxylic anhydride, and
(c) a tertiary amine as curing accelerator,
where one portion of the curing accelerator (c) is replaced by
(d) a complex of a boron halide with an amine,
wherein the tertiary amine comprises 1,4-diazabicyclo[2.2.2]octane or a C₁-C₄alkyl-substituted derivative of 1,4-diazabicyclo[2.2.2]octane.

2. A system according to claim 1, comprising 1,4-diazabicyclo[2.2.2]octane as component (c).

3. A system according to either of claims 1 and 2, comprising complexes of the formula B(Hal)₃X, in which X is an amine of formula H₂NR¹ or NR¹R²R³ and Hal is a fluorine or chlorine atom, and R¹, R², R³ are each independently of one another an alkyl radical of 1 to 18 carbon atoms, a cycloalkyl radical of 3 to 18 carbon atoms, an aralkyl radical of 6 to 18 carbon atoms, an aromatic radical of 6 to 18 carbon atoms, or R¹ and R², together with the nitrogen atom in the above formula, are a five- or six-membered heterocycle to which a further benzene ring may be fused, and R³ has one of the meanings given above, or R¹, R² and R³, together with the nitrogen atom in the above formula, are a five- or six-membered heterocycle to which a further benzene ring may be fused.

4. A system according to one of claims 1 to 3, wherein the weight ratio of component (c) to component (d) is between 8 to 92 and 75 to 25.

5. A system according to one of claims 1 to 4, comprising as epoxy resin a glycidyl ether based on bis(4-hydroxyphenyl)methane (bishenol F) and/or on 2,2'-bis(4-hydroxyphenyl)propane (bisphenol A) or on a mixture of bisphenol A and bisphenol F.

6. A system according to one of claims 1 to 5, which comprises anhydrides of aromatic or cycloaliphatic polycarboxylic acids.

7. A system according to claim 1 in the form of a plurality of single components each comprising only a portion of the consituents (a), (b), (c) and (d).

8. The use of a system according to one of claims 1 to 7 as a casting composition, especially an electrical casting composition.

9. A process for producing shaped objects using a system according to one of claims 1 to 7, in which a component of said system comprising the epoxy resin and a component of said system that comprises the hardener, and also the other optional constitutents of the system, are mixed at a temperature below the curing temperature, and this mixture is supplied under normal or elevated pressure to a mould in which the temperature is sufficiently high to effect cure of the moulding material, and uncured moulding material is subsequently introduced preferably continuously in such an amount as to compensate for any shrinkage of the moulding material in the mould occurring in the course of the cure.

## Revendications

1. Système de substances thermodurcissable comprenant
(a) au moins une résine époxyde,
(b) au moins un anhydride d'acide polycarboxylique, et
(c) une amine tertiaire comme accélérateur de durcissement,
une partie de l'accélérateur de durcissement (c) étant remplacé par
(d) un complexe à partir d'halogénure de bore et d'amine,
caractérisé en ce qu'il s'agit, pour l'amine tertiaire, du 1,4-diazabicyclo-(2,2,2)-octane ou d'un dérivé de 1,4-diazabicyclo-(2,2,2)-octane substitué par un alkyle en C₁-C₄.

2. Système de substances selon la revendication 1, qui contient comme composant (c) le 1,4-diazabicyclo-(2,2,2)-octane.

3. Système de substances selon l'une des revendications 1 ou 2, caractérisé en ce qu'il contient des complexes de formule
B(Hal)₃X
où
X représente une amine de formule H₂NR¹ ou NR¹R²R³ et
Hal un atome de fluor ou un atome de chlore, ainsi que
R¹, R², R³, indépendants l'un de l'autre, représentent un reste alkyle avec de 1 à 18 atomes de carbone, un reste cycloalkyle avec de 3 à 18 atomes de carbone, un reste aralkyle avec de 6 à 18 atomes de carbone, un reste aromatique avec de 6 à 18 atomes de carbone, ou R¹ et R² représentent, ensemble avec l'atome d'azote dans la formule précédente, un hétérocycle à 5 ou à 6 chaînons, sur lequel est éventuellement condensé un cycle benzène, et R³ a l'une des significations déjà citées, ou
R¹, R² et R³ forment, ensemble avec l'atome d'azote dans la formule précitée, un hétérocycle à 5 ou 6 chaînons, sur lequel est éventuellement condensé un cycle benzène.

4. Système de substances selon une des revendications 1 à 3, dans lequel le rapport en poids du composant (c) au composant (d) est compris entre 8 et 92 et entre 75 et 25.

5. Système de substances selon l'une des revendications 1 à 4, qui contient comme résine époxyde un éther glycidylique à base de bis(4-hydroxyphényl)méthane (bisphénol F) et/ou à base de 2,2'-bis(4-hydroxyphényl)propane (bisphénol A) ou à base d'un mélange de bisphénol A et de bisphénol F.

6. Système de substances selon l'une des revendications 1 à 5, qui contient des anhydrides d'acides polycarboxyliques aromatiques ou cycloaliphatiques.

7. Système de substances selon l'une des revendications 1 à 6, sous forme de système à plusieurs composants, ne comprenant à chaque fois qu'une partie des composants (a), (b), (c) et (d).

8. Utilisation d'un système de substances selon l'une des revendications 1 à 7, comme matière à couler, en particulier matière à couler pour le domaine électrique.

9. Procédé de préparation de corps moulés à l'aide d'un système de substances selon l'une des revendications 1 à 7, dans lequel on mélange un composant du système de substances comprenant la résine époxyde et un composant comprenant du système de substances comprenant le durcisseur, ainsi qu'éventuellement d'autres constituants du système de substances, à une température inférieure à la température de durcissement, et on amène ce mélange, éventuellement sous pression, à un moule, dont la température intérieure est tellement élevée que la matière durcit, en apportant en continu de la matière de préférence non durcie dans une mesure qu'un retrait éventuel de la matière se trouvant dans le moule, ayant lieu au cours du durcissement, soit compensé.
